Europäisches Patentamt

European Patent Office

Office européen des brevets

(19)

(11) Numéro de publication : **0 224 407**
**B1**

(12) **FASCICULE DE BREVET EUROPÉEN**

(45) Date de publication du fascicule du brevet :
**28.06.89**

(51) Int. Cl.⁴ : **F 16 H   3/08**

(21) Numéro de dépôt : **86402390.8**

(22) Date de dépôt : **24.10.86**

(54) **Boîte de vitesses mécanique à un arbre primaire et à deux arbres secondaires.**

(30) Priorité : 25.10.85 FR 8515852
17.10.86 FR 8614434

(43) Date de publication de la demande :
**03.06.87 Bulletin 87/23**

(45) Mention de la délivrance du brevet :
**28.06.89 Bulletin 89/26**

(84) Etats contractants désignés :
**AT BE DE ES GB IT NL SE**

(56) Documents cités :
**EP–A– 0 046 373**
**FR–A– 2 291 054**
**GB–A– 2 074 669**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Saint Jean, Alain**
**13, rue Eugène Sue**
**F-92290 Chatenay-Malabry (FR)**
Inventeur : **Bagard, Michel**
**19/21, rue Gustave Rey**
**F-92250 La Garenne-Colombes (FR)**

(74) Mandataire : **Chassagnon, Jean-Alain et al**
**REGIE NATIONALE DES USINES RENAULT (S.0804)**
**F-92109 Boulogne-Billancourt Cedex (FR)**

EP 0 224 407 B1

## Description

La présente invention se rapporte à une boîte de vitesses mécanique à trois arbres, qui permet d'avoir cinq vitesses avant et une marche arrière, et qui s'applique notamment à des véhicules automobiles.

On connaît de nombreuses boîtes de vitesse mécaniques trois arbres, telles que celles à un premier arbre secondaire, qui permet avec l'arbre primaire d'avoir une boîte de vitesses mécanique classique à quatre vitesses avant et une marche arrière classique à baladeur, et auxquelles on ajoute simplement un deuxième arbre secondaire, sur lequel on dispose un pignon de cinquième vitesse, qui est entraîné par le même pignon de l'arbre primaire, que le pignon de quatrième vitesse.

On connaît d'autres types de boîte de vitesses mécanique, qui prévoient sur un premier arbre secondaire les pignons de première et de deuxième vitesses avant et de marche arrière, tandis que le deuxième arbre secondaire comporte les pignons de troisième, quatrième, et cinquième vitesse avant. Dans ces structures ramassées, où l'on peut avoir les pignons fous de premières et de troisième, qui sont entraînés par le même pignon primaire, tandis que les pignons fous de deuxième et de quatrième sont entraînés par le même pignon de l'arbre primaire. Cette disposition conduit, pour l'étagement des vitesses, à avoir deux pignons de sortie de mouvement des arbres secondaires, appelés pignons de descente ou d'attaque qui soient différents. Cette caractéristique de structure verrouille l'étagement de la boîte de vitesses à tous les niveaux pour une ouverture entre la première et la quatrième vitesse donnée ; et par conséquent pour les ouvertures intermédiaires entre la première et la deuxième, entre la deuxième et la troisième, et entre la troisième et la quatrième.

Du document EP-A-0 046 373 est connue une telle boîte à trois arbres qui permet d'avoir une marche arrière synchronisée dans un encombrement réduit, avec un synchroniseur double de cinquième et de marche arrière disposé sur un des arbres secondaires.

Le but de la présente invention est de proposer une boîte de vitesses mécaniques à trois arbres, qui permet d'avoir cinq vitesses avant et une marche arrière synchronisée dans un encombrement axial le plus réduit possible, tout en permettant une certaine variation de l'ouverture de la boîte de vitesses pour une structure et des dimensions données.

Selon un mode de réalisation de l'invention, la boîte de vitesses mécanique à un arbre primaire et à deux arbres secondaires est caractérisée en ce que :

le premier arbre secondaire comporte les pignons fous de première, de deuxième, de cinquième vitesse avant et de marche arrière ; avec un synchroniseur double disposé entre les pignons de première et de deuxième, et entre les pignons de cinquième et de marche arrière ;

le deuxième arbre secondaire comporte les pignons fous de troisième et de quatrième vitesse avant avec un synchroniseur double disposé entre les pignons de troisième et quatrième ;

le pignon de troisième étant disposé entre la denture du pignon fou de marche arrière du premier arbre secondaire, et le synchroniseur double de cinquième et de marche arrière.

Selon un mode de réalisation de l'invention, le pignon fou de quatrième vitesse avant du deuxième arbre secondaire, et le pignon fou de cinquième vitesse avant du premier arbre secondaire sont entraîné l'un et l'autre par le même pignon de l'arbre primaire.

Selon un mode de réalisation de l'invention, le pignon de descente du deuxième arbre secondaire est identique au pignon de descente du premier arbre secondaire.

Selon un mode de réalisation de l'invention, le pignon intermédiaire de marche arrière est monté sur un axe intermédiaire, qui est solidaire du carter d'embrayage, et qui est monté en porte à faux dans ce carter d'embrayage.

La boîte de vitesses mécanique à trois arbres selon l'invention présente ainsi l'avantage de permettre une adaptation de l'étagement entre les premières, deuxièmes, troisièmes et quatrièmes vitesses. De plus cette boîte de vitesses offre la possibilité d'avoir deux pignons d'attaque, sur la sortie de mouvement des arbres secondaires, qui soient identiques. Cette disposition permet d'avoir, d'une part une meilleure standardisation et un prix de revient plus faible, et d'autre part une plus grande facilité d'adaptation des rapports de descente de mouvement sur la couronne du différentiel suivant le véhicule à équiper. En effet pour ce dernier point, il ne faut changer que les dimensions de deux éléments complémentaires : la couronne du différentiel et son pignon d'attaque ; ce pignon d'attaque étant identique pour chacun des arbres secondaires. Le rapport de descente est le même pour chacun des arbres secondaires, et on revient ainsi au cas le plus simple d'une boîte de vitesses mécanique à deux arbres. Enfin, la boîte de vitesses mécanique à trois arbres selon l'invention permet d'avoir une marche arrière synchronisée, qui est disposée dans un encombrement axial très réduit.

L'invention sera mieux comprise par l'étude d'un mode de réalisation particulier décrit à titre nullement limitatif et illustré par les dessins annexés, sur lesquels :

la figure 1 est une vue longitudinale développée en coupe d'une boîte de vitesses selon l'invention ;

la figure 2 est une vue partielle suivant II de la figure 1 ;

la figure 3 est une coupe partielle III-III de la figure 2 ;

la figure 4 est une vue longitudinale développée en coupe d'une boîte de vitesses selon l'invention.

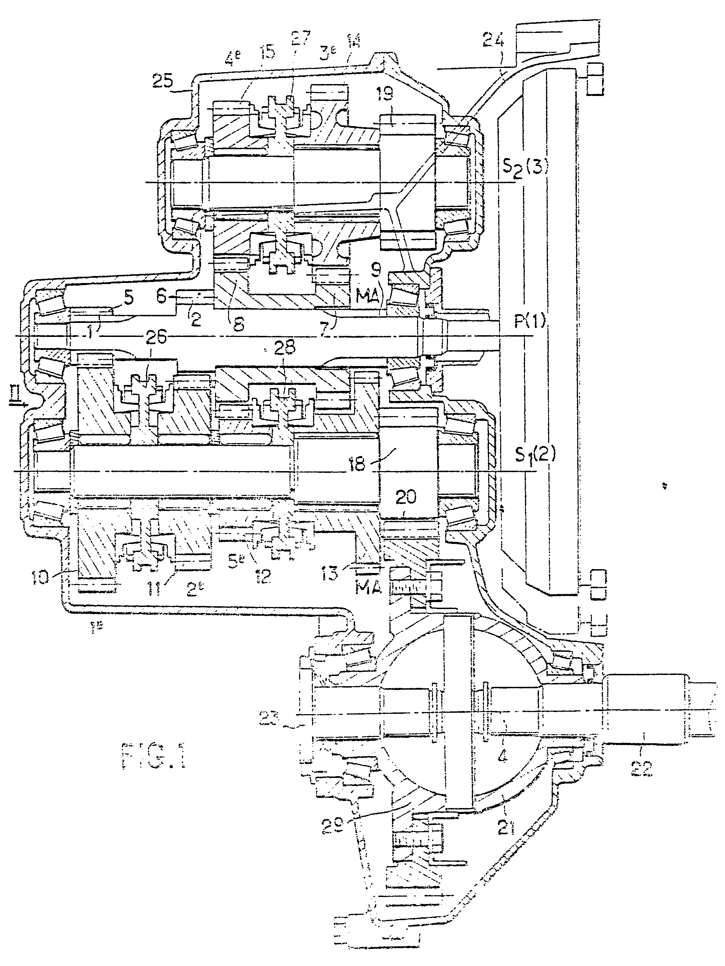

On voit sur la figure 1 l'ensemble d'une boîte de vitesses mécanique à trois arbres selon l'invention cette boîte de vitesses comprend un arbre primaire 1 qui entraîne soit un premier arbre secondaire 2, soit un deuxième arbre secondaire 3. L'arbre primaire 1 et les deux arbres secondaires 2 et 3 sont montés avec le différentiel 29 sont montés d'une part dans un carter d'embrayage 24, et d'autre part dans un carter de mécanisme 25. Le carter d'embrayage 24 est monté directement sur le moteur, et il reçoit le carter de mécanisme 25 qui vient se fixer sur ledit carter d'embrayage 24. Chacun des arbres primaire 1 et secondaire 2 et 3 et le différentiel 29 sont disposés d'une manière connue en soi au moyen de roulements dans ces carters.

L'arbre primaire 1 porte le pignon 5 de première vitesse et le pignon 6 de deuxième vitesse. Un ensemble de pignon 7 de troisième vitesse et 8 de quatrième vitesse sont associés l'un avec l'autre dans un pignon double, et ce dernier ensemble est monté sur l'arbre primaire 1. Cet ensemble de pignon 7 et 8 est solidaire avec l'arbre primaire 1 au moyen de la denture d'un pignon 9 de marche arrière qui est usiné directement dans ledit arbre primaire 1.

Le premier arbre secondaire 2 porte un pignon fou 10 de première vitesse, un pignon fou 11 de deuxième vitesse, un pignon fou 12 de cinquième vitesse, et un pignon fou 13 de marche arrière. Ces pignons 10, 11, 12 et 13 sont montés au moyen d'aiguilles sur le premier arbre secondaire 2. Ce premier arbre secondaire 2 comporte à son extrémité, immédiatement après le pignon fou 13 de marche arrière, un pignon de sortie de mouvement appelé pignon de descente 18. Un synchroniseur double 26 est disposé sur le premier arbre primaire 2 entre le pignon fou 10 de première et le pignon fou 11 de deuxième. Un autre synchroniseur double 28 est disposé entre le pignon fou 12 de cinquième et le pignon fou 13 de marche arrière.

Le deuxième arbre secondaire comporte un pignon fou 14 de troisième vitesse et un pignon fou 15 de quatrième vitesse. Ces pignons fous 14 et 15 sont montés sur le deuxième arbre secondaire 3 au moyen d'aiguilles selon un dispositif connu en soi. Un pignon de sortie de mouvement appelé pignon de descente 19 est disposé sur le deuxième arbre secondaire 3. Ce pignon de descente 19 se trouve immédiatement après le pignon fou de troisième 14. Un synchroniseur double 27 est placé entre le pignon fou 14 de troisième vitesse et le pignon fou 15 de quatrième vitesse.

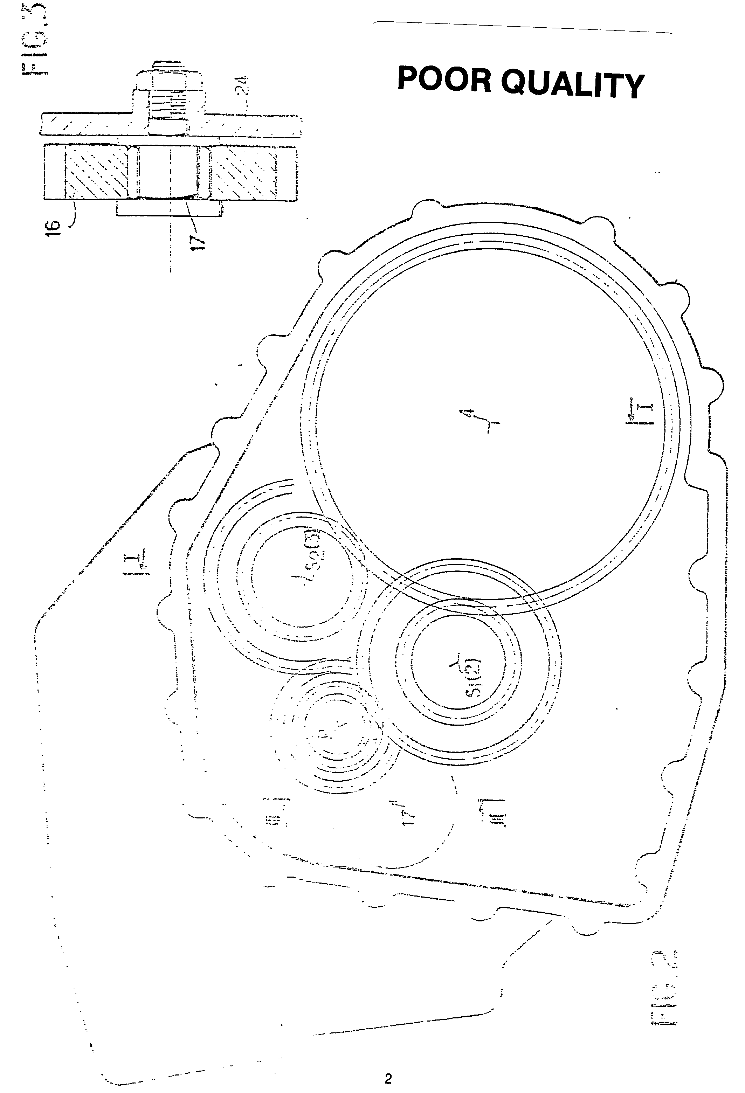

Le pignon de descente 18 du premier arbre secondaire 2 engrène avec la couronne 20 du différentiel 29. De la même manière le pignon de descente 19 du deuxième arbre secondaire 3 engrène avec la couronne 20 du différentiel 29. On peut voir sur la figure 2 la disposition des différents axes de l'arbre primaire 1, des deux arbres secondaires 2 et 3 et de l'axe 4 du différentiel 29. La couronne 20 du différentiel 29 est monté sur le boîtier 21, et le mouvement est envoyé aux roues par les sorties de transmission 22 et 23.

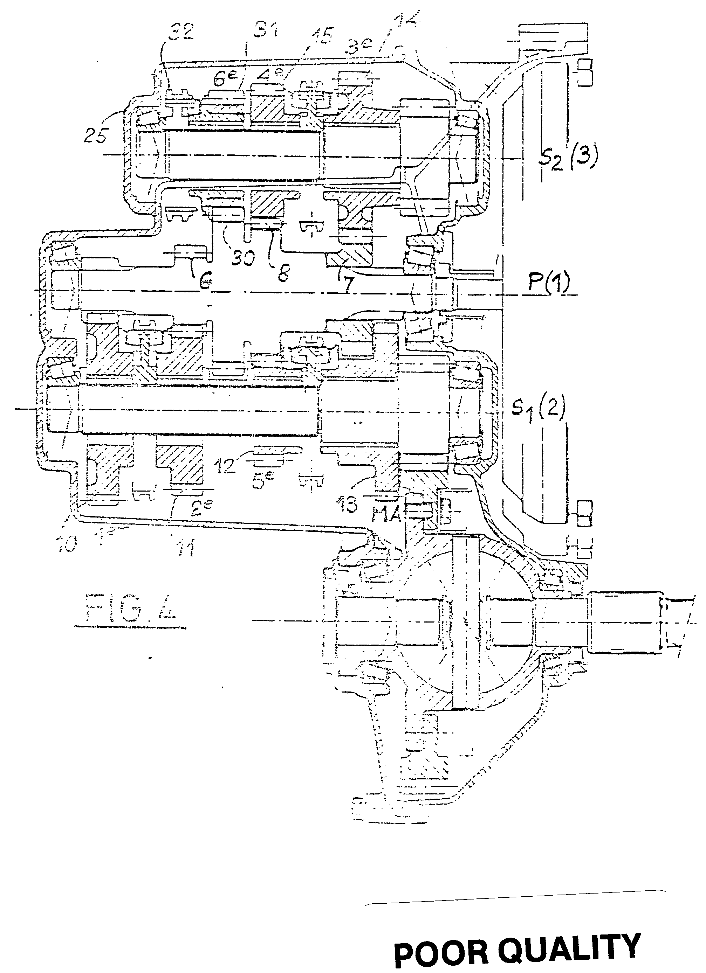

On voit sur les figures 2 et 3 le dispositif de marche arrière. Ce dispositif comprend un axe intermédiaire de marche arrière 17 qui est monté en porte à faux dans le carter d'embrayage 24. Cet axe intermédiaire 17 porte un pignon intermédiaire 16 de marche arrière, qui est monté fou sur l'arbre 17 au moyen d'aiguilles.

La boîte de vitesses selon l'invention est telle que le pignon fou 15 de quatrième vitesse du deuxième arbre secondaire 3, et que le pignon fou 12 de cinquième vitesse du premier arbre secondaire 2 sont entraînés l'un et l'autre par le même pignon 8 de l'arbre primaire 1.

De plus la structure selon l'invention et la disposition des axes de l'arbre primaire 1 et des arbres secondaires 2 et 3 ainsi que de l'axe 4 du différentiel 29 permettent d'avoir un pignon de descente 19 du deuxième arbre secondaire 3, qui soit identique au pignon de descente 18 du premier arbre secondaire.

La structure selon l'invention est particulièrement intéressante parce qu'elle prévoit que le pignon de troisième vitesse 7 de l'arbre primaire 1 soit disposé entre la denture du pignon fou 13 de marche arrière du premier arbre secondaire 2, et le synchroniseur double 28 de cinquième vitesse et de marche arrière. Cette disposition permet en effet d'obtenir un encombrement axial le plus réduit possible, et permet d'autre part d'avoir une marche arrière synchronisée.

De plus la structure de boîte de vitesses selon l'invention permet d'obtenir avec les mêmes entraxes entre l'arbre primaire 1 et les deux arbres secondaires 2 et 3, une ouverture entre les vitesses quatrième et cinquième qui peut varier de 1, 15 à 1, 35 en jouant sur les modules de dentures à entraxes constants. Ceci permet d'obtenir à partir d'une même structure de carter, des étagements de boîtes différents.

Une variante de l'invention est représentée sur la figure 4.

Un pignon fou de sixième 31 est monté à l'extrémité du deuxième arbre secondaire 3, c'est-à-dire après le pignon fou de quatrième 15.

Un synchroniseur simple 32 est accolé au pignon fou de sixième 31 et l'ensemble est disposé entre le roulement d'extrémité et ledit pignon fou de quatrième 15.

Le pignon fou de sixième 31 engrène avec un pignon de sixième 30 de l'arbre primaire 1. Ledit pignon de sixième 30 est disposé entre le pignon de quatrième 8 et le pignon de deuxième 6 de l'arbre primaire 1.

## Revendications

1. Boîte de vitesses mécanique à un arbre primaire (1) et à deux arbres secondaires (2) et (3) comportant une marche arrière synchronisée caractérisée en ce que :

le premier arbre secondaire (2) comporte les pignons fous de première (10), de deuxième (11), de cinquième (12) et de marche arrière (13) ; avec un synchroniseur double (26) disposé entre les pignons de première (10) et de deuxième (11), et un synchroniseur double (28) disposé entre les pignons de cinquième (12) et de marche arrière (13) ;

le deuxième arbre secondaire (3) comporte les pignons fous de troisième (14) et de quatrième (15) avec un synchroniseur double (27) disposé entre les pignons de troisième (14) et de quatrième (15) ;

le pignon de troisième (7) de l'arbre primaire (1) étant disposé entre la denture du pignon fou (13) de marche arrière du premier arbre secondaire (2), et le synchroniseur double (28) de cinquième et de marche arrière.

2. Boîte de vitesses selon la revendication 1, caractérisée en ce que le pignon fou de quatrième (15) du deuxième arbre secondaire (3) et le pignon fou de cinquième (12) du premier arbre secondaire (2) sont entraînés l'un et l'autre par le même pignon (8) de l'arbre primaire (1).

3. Boîte de vitesses selon l'une quelconque des revendications précédentes, caractérisée en ce que le pignon de descente (19) du deuxième arbre secondaire (3) est identique au pignon de descente (18) du premier arbre secondaire (2).

4. Boîte de vitesses selon l'une des revendications précédentes, caractérisée en ce que le pignon intermédiaire (16) de marche arrière est monté sur un axe intermédiaire (17) ; ledit axe (17) étant solidaire du carter d'embrayage (24), et monté en porte à faux dans ledit carter d'embrayage (24).

5. Boîte de vitesses selon la revendication 1, caractérisée en ce que le deuxième arbre secondaire (3) comporte un pignon fou de sixième (31) avec un synchroniseur simple (32), l'ensemble étant disposé à l'extrémité dudit arbre secondaire (3), ledit pignon fou de sixième (31) engrenant avec un pignon de sixième (30) de l'arbre primaire (1) et étant disposé entre le pignon de quatrième (8) et de deuxième (6) de l'arbre primaire (1).

## Claims

1. A mechanical gearbox having a primary shaft (1) and two secondary shafts (2 and 3) comprising a synchronized reverse characterised in that :

the first secondary shaft (2) comprises the idle first gear (10), second gear (11), fifth gear (12) and reverse gear (13) pinions ; with a double synchronizer (26) disposed between the first gear and second gear pinions (10 and 11) and a double synchronizer (28) disposed between the fifth and reverse gear pinions (12, 13) ;

the second secondary shaft (3) comprises the idle third gear and fourth gear pinions (14 and 15) with a double synchronizer (27) disposed between the third gear and fourth gear pinions (14 and 15) ;

the third gear pinion (7) on the primary shaft (1) being disposed between the teeth of the idle reverse gear pinion (13) on the first secondary shaft (2) and the double fifth and reverse gear synchronizer (28).

2. A gearbox according to claim 1 characterised in that the idle fourth gear pinion (15) on the second secondary shaft (3) and the idle fifth gear pinion (12) on the first secondary shaft (2) are both driven by the same pinion (8) on the primary shaft (1).

3. A gearbox according to any one of the preceding claims characterised in that the step-down pinion (19) on the second secondary shaft (3) is identical to the step-down pinion (18) on the first secondary shaft (2).

4. A gearbox according to one of the preceding claims characterised in that the intermediate reverse gear pinion (16) is mounted on an intermediate shaft (17) ; said shaft (17) being fixed with respect to the clutch housing (24) and mounted in cantilever relationship in said clutch housing (24).

5. A gearbox according to claim 1 characterised in that the second secondary shaft (3) comprises an idle sixth gear pinion (31) with a single synchronizer (32), the assembly being disposed at the end of said secondary shaft (3), and said idle sixth gear pinion (31) meshing with a sixth gear pinion (30) on the primary shaft (1) and being disposed between the fourth gear pinion (8) and the second gear pinion (6) on the primary shaft (1).

## Patentansprüche

1. Zahnradgetriebe mit einer Antriebswelle (1) und mit zwei Vorgelegewellen (2 und 3) mit synchronisiertem Rückwärtsgang, dadurch gekennzeichnet, daß

die erste Vorgelegewelle (2) bewegliche Ritzel für den ersten Gang (10), für den zweiten Gang (11), für den fünften Gang (12) und für den Rückwärtsgang (13) aufweist, mit einem doppelten Synchronschieber (26) zwischen den Ritzeln (10 und 11) für den ersten und zweiten Gang und mit einem doppelten Synchronschieber (28) zwischen den Ritzeln (12 und 13) für den fünften Gang und den Rückwärtsgang ;

die zweite Vorgelegewelle (3) bewegliche Ritzel für den dritten Gang (14) und den vierten Gang (15) aufweist mit einem doppelten Synchronschieber (27) zwischen den Ritzeln (14 und 15) für den dritten und den vierten Gang ;

das Ritzel für den dritten Gang (7) der Antriebswelle (1) zwischen der Zahnung des beweglichen Ritzels (13) für den Rückwärtsgang der ersten Vorgelegewelle (2) und dem Synchronschieber (28) des fünften Gangs und des Rückwärtsgangs angeordnet ist.

2. Zahnradgetriebe nach Anspruch 1, dadurch gekennzeichnet, daß das bewegliche Ritzel für den vierten Gang (15) der zweiten Vorgelegewelle (3) und das bewegliche Ritzel für den fünften Gang (12) der ersten Vorgelegewelle (2) zusammen durch das gleiche Ritzel (8) der Antriebswelle (1) angetrieben sind.

3. Zahnradgetriebe nach einem der vorhergehenden Ansprüche, dadurch gekennzeichnet, daß das Abtriebsritzel (19) der zweiten Vorgelegewelle (3) identisch mit dem Abtriebsritzel (18) der ersten Vorgelegewelle (2) ist.

4. Zahnradgetriebe nach einem der vorhergehenden Ansprüche, dadurch gekennzeichnet, daß das Zwischenritzel (16) für den Rückwärtsgang auf einer Zwischenachse (17) angeordnet ist und daß die Achse (17) fest mit dem Kupplunsgehäuse (24) verbunden ist und in diesem fliegend angeordnet ist.

5. Zahnradgetriebe nach Anspruch 1, dadurch gekennzeichnet, daß die zweite Vorgelegewelle (3) ein bewegliches Ritzel für den sechsten Gang (31) aufweist, mit einem einfachen Synchronschieber (32), wobei die Anordnung am Ende der zweiten Welle (3) angeordnet ist und das bewegliche Ritzel für den sechsten Gang (31) mit einem Ritzel für den sechsten Gang (30) der Antriebswelle (1) kämmt und zwischen dem Ritzel für den vierten Gang (8) und dem zweiten Gang (6) der Antriebswelle angeordnet ist.

FIG.1

FIG.2

FIG.3

EP 0 224 407 B1

FIG. 4